# EUROPEAN PATENT APPLICATION

(11) **EP 1 387 314 A1**
(43) Date of publication of application: **04.02.2004**
(21) Application number: 02722859.2
(22) Date of filing: 26.04.2002
(51) Int. Cl.: G06T 1/00, G02B 7/28, G03B 15/00, H04N 5/238, H04N 5/225

(54) **METHOD AND APPARATUS FOR PICKING UP IMAGE OF OBJECT BEING AUTHENTICATED**

(30) Priority: 11.05.2001 JP 2001141661
(71) Applicant: MATSUSHITA ELECTRIC INDUSTRIAL CO., LTD., Kadoma-shi, Osaka 571-0050 (JP)
(72) Inventor: IKE, Takahiro, Yokohama-shi, Kanagawa 240-0051 (JP)
(74) Representative: Holmes, Miles
(86) International application number: PCT/JP2002/004268
(87) International publication number: WO 2002/093481

(57) **Abstract**

The number of high luminance lines whose luminance value is equal to or greater than a predetermined value among the lines contained in a thinned image of an image picked up by a telephoto camera oriented toward the iris position of an authentication object is compared with a set value. In case the number of high luminance lines equal to or greater than the set value exists, an iris illuminating direction is switched to obtain the illuminating direction where the number of high luminance lines is smaller than the set value, the iris is illuminated in the illuminating direction thus obtained and a focus position of the iris is searched for using a thinned image of an image picked up by the telephoto camera to acquire an iris image as an object of authentication. This rapidly acquires an iris image containing only a small amount of illuminating light.

## Description

### Technical Field

The present invention relates to an authentication object image pickup method and apparatus used in a security system, and in particular to a method and apparatus for picking up a favorable image of authentication object even when a person wears glasses.

### Background Art

In a security system, a method is known to perform authenticationby using the pattern of the iris of an individual, as described in the Japanese Patent Publication No. H08-504979 and the Japanese Patent Publication No. 2000-23946. Thismethod of using an iris, unlike a method using fingerprints, has an advantage of completing authentication by way of image pickup using a camera from a distance of an iris in a non-contact way. Thus the method is expected to be diffused in future. An iris image pickup apparatus used for personal authentication employs an auto-focus (AF) technology in order to acquire a clear iris image where the iris is in focus, as described in the Japanese Patent Publication No. 2000-131598. The AF technology, taking advantage of the phenomenon that the more clear image of a contour is obtained while the subject is in focus, the more high-frequency components are contained in the image pickup signal, changes and searches for a lens position where the high-frequency component contained in an image pickup signal is at its peak.

Unlike general cameras, in case an iris image is picked up by using the AF technology, it is a problem that the person to be authenticated wears glasses. In case the image of the iris of a person to be authenticated is picking up by using the AF technology, a large number of high-frequency components generated at the frame of the grasses are contained in the image so that the iris image pickup apparatus brings the glasses in focus thus cannot acquire a clear iris image. Further, an iris illuminating light in the lenses of the glasses hides the iris image thus reducing the recognition ratio.

Thus, in a conventional technology according to the Japanese Patent Publication No. H10-5195, whether the acquired image is good depending on the irregular reflection of an illuminating light caused by the glasses, and when the acquired image is determined to be bad, an iris image is captured again with the irradiation direction of the illuminating light changed.

When the direction of illumination is changed to prevent a reflected light from the glasses from reaching an image pickup camera in case the reflected light from the glasses is in large quantity as in the aforementioned background art, it is possible to bring the iris in focus and the iris image is no more hidden by the illuminating light in the lenses of the glasses. However, the person to be authenticated stays still for only a short time and it is difficult to repeat the image capture process and determination on whether the acquired image is good (determination on whether the illuminating light is in the lenses of the glasses) to determine in a short time the illuminating direction where the illuminating light is in the iris image.

### Disclosure of the Invention

The invention has been proposed in view of the aforementioned circumstances and aims at providing an image pickup method and apparatus for an authentication object which can collect images with high authentication ratio at a high speed where an illuminating light is not in an image of the authentication object even when the person to be authenticated wears glasses.

An image pickup method and apparatus for an authentication object which attain the aforementioned objectarecharacterized in that the method and the apparatus compare the number of high luminance lines whose luminance value is equal to or larger than a predetermined value among the lines contained in a picked up image of an authentication object, with a set value, and in case the number of the high luminance lines is equal to or larger than the set value, the method and the apparatus change the illuminating direction of the authentication object to acquire the illuminating direction where the number of the high luminance lines is smaller than the set value and acquire an image of an authentication object while illuminating the authentication object in the illuminating direction obtained.

In this way, by determining the presence of an illuminating light in the iris image by the number of high luminance lines, it is possible to acquire in a short time the illuminating direction where the illuminating light is in the iris image, thus acquiring at a high speed an image optimum for authentication.

Preferably, an authentication object image pickup method and apparatus according to the invention are characterized in that the method and the apparatus acquire an image of an authentication object while illuminating the authentication object in the illuminating direction where the number of the high luminance lines is smallest in case attempts have failed to acquire an illuminating direction where the number of the high luminance lines is smaller than the set value. With this configuration, it is possible to avoid a situation where an image of the authentication obj ect is not acquired thus disabling authentication.

Preferably, an authentication object image pickup method and apparatus according to the invention are characterized in that the method and the apparatus increase the quantity of light used when the image of the authentication object is acquired in case it is determined that the authentication object wears glasses based on the fact that the number of high luminance lines is equal to or larger than the set value. With this configuration, it is possible to offset the attenuation of quantity of light assumed when an illuminating light passes through glasses thus allowing acquisition of a light image of a authentication object.

Preferably, an authentication object image pickup method and apparatus according to the invention are characterized in that the method and apparatus perform processing to obtain the illuminating direction based on the picked up image by using a thinned image where the depth of focus is the distance to the authentication object measured using a ranging sensor and that the picked up image is a thinned image comprising lines at intervals of a predetermined number of lines among the lines constituting the entire image. With this configuration, it is possible to boost the processing to capture picked up images from image pickup means and processing to determine the number of high luminance lines, thereby reducing the time to determination of an optimum illumination direction.

### Brief Description of the Drawings

Fig. 1 is a front view of iris image pickup apparatus with the external panel removed according to an embodiment of the invention.
Fig. 2 is a perspective view of iris image pickup apparatus according to an embodiment of the invention.
Fig. 3 is a block diagram of a controller mounted on the iris image pickup apparatus according to an embodiment of the invention.
Fig. 4 is a flowchart showing the procedure of the controller mounted on the iris image pickup apparatus according to an embodiment of the invention.
Fig. 5 shows the image pickup state of a wide angle camera mounted on the iris image pickup apparatus according to an embodiment of the invention.
Fig. 6 is a flowchart showing the iris illuminating direction determination procedure of the iris image pickup apparatus according to an embodiment of the invention.

In the figures, a numeral 10 represents iris image pickup apparatus, 11 a left iris illuminator, 12a a pan motor for the left iris illuminator, 12b a tilt motor for the left iris illuminator, 13 a right iris illuminator, 13a a pan motor for the right iris illuminator, 13b a tilt motor for the right iris illuminator, 21 a tilt motor, 22 a telephoto camera, 23 a pan mirror, 24 a range sensor, 25 a wide angle camera, and 26 a pan motor.

### Best Mode for Carrying Out the Invention

An embodiment of the invention will be described referring to the drawings.

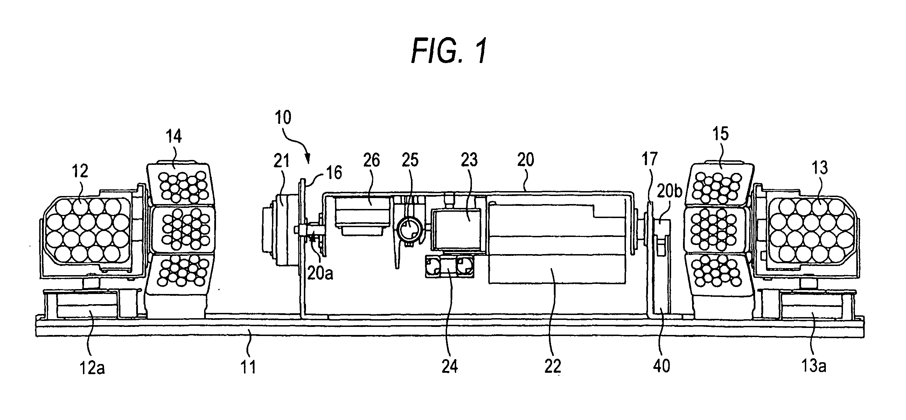

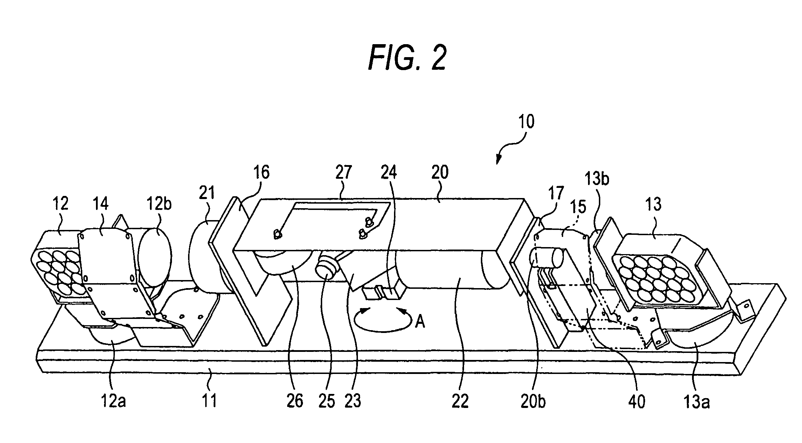

Fig. 1 is a front view of iris image pickup apparatus according to an embodiment of the invention. Fig. 2 is a perspective thereof. In Figs. 1 and 2, an externally provided panel is not shown.

Iris image pickup apparatus 10 according to this embodiment includes a longitudinal fixed table 11, each of the left and right ends of which are attached iris illuminator s 12, 13. Each iris illuminator 12, 13 has a condensing lens for condensing and irradiating infrared rays on the iris and pan motors for illuminators 12a, 13a and tilt motors for illuminators 12b, 13b in order to orient the illuminating light in the direction of the iris.

On the inner side of the iris illuminators (at the center side of the fixed table 11), illuminators for wide angle cameras 14, 15 are attached. The illuminators for wide angle cameras 14, 15 are configured as an aggregation of a large number of light emitting diodes. Those light emitting diodes are not shown and only the mounting plate for attaching the light emitting diodes is shown in the perspective view of Fig. 2. The illuminators 14, 15 are secured to the fixed table 11 and no condensing lenses are provided, because they have only to illuminate a wide range evenly with infrared rays.

On the inner side of the illuminator for wide angle cameras 14 (at the center side of the fixed table 11), a support plate 16 is erected. On the inner side of the illuminator for wide angle cameras 15 (at the center side of the fixed table 11), a support plate 17 is erected. A tilt table 20 is attached between both support plates 16, 17.

The tilt table 20 has axes 20a, 20b on the left and right respectively. Each axis 20a, 20b is respectively supported rotatably on the support plates 16, 17. One axis 20a is directly coupled to the rotation axis of the tilt motor 21 attached on the support plate 16. The other axis 20b is attached to a damper 40.

The tilt table 20 mounts a telephoto camera (narrow angle camera) 22, a pan mirror 23, a range finder (range sensor) 24, a wide angle camera 25, and a pan motor 26. A telephoto camera 22 is arranged on the support plate 17 of the tilt table 20 so that the light axis may be coaxial with the rotation axis of the tilt table 20. The pan mirror 23 is arranged in front of the telephoto camera 22 . A light reflected on the pan mirror 23 is incident on the telephoto camera 22. The pan mirror 23 is rotatable about the axis perpendicular to the light axis of the telephoto camera 22, that is, in the direction of a double-headed arrow A in Fig. 2.

The pan motor 26 for driving the pan mirror 23 in the direction of the arrow A is attached to the support plate 16 of the tilt table 20 and drives the pan mirror 23 via the link mechanism 27. The range finder 24, interlocked with the pan mirror 23, is driven in the direction of the arrowAand irradiates an infrared light onto an object face to face thus allowing high-accuracy ranging. The range finder 24 is also driven by the pan motor 26 via the link mechanism 27.

The wide angle camera 25 is arranged between the pan mirror 23 and the pan motor 26 and its light axis is provided at an intersection with the rotation axis of the tilt table 20. This eliminates the vertical parallax between the wide angle camera 25 and the telephoto camera 22.

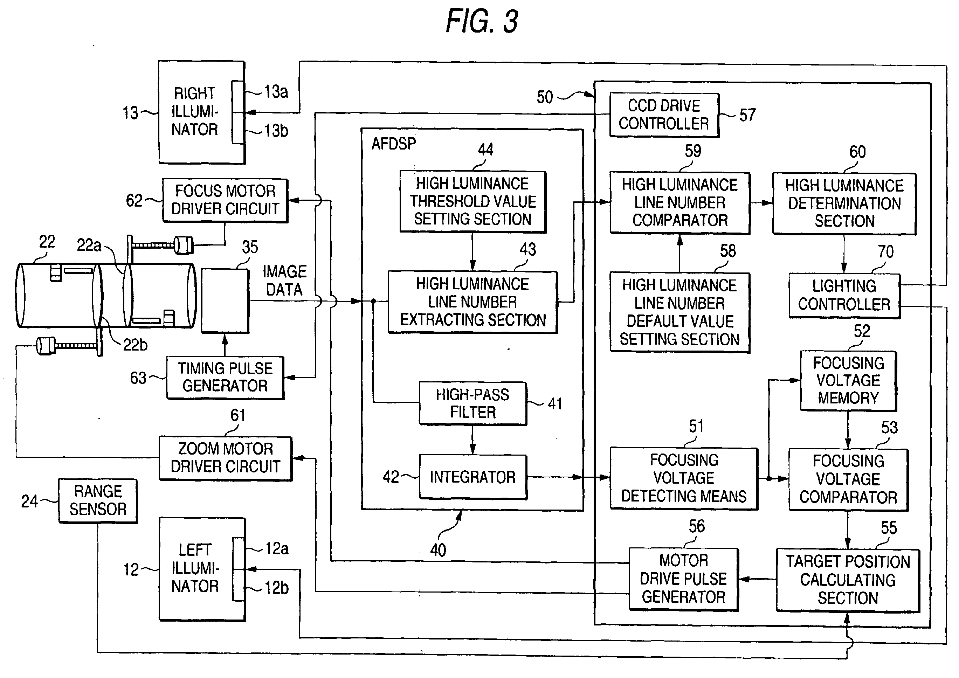

Fig. 3 is a functional block diagram of a controller for controlling the iris image pickup apparatus of the aforementioned configuration. The controller includes a known AFDSP (Auto Focus Digital Signal Processor) 40 for capturing an image signal from image pickup means provided on the telephoto camera 22, for example CCD 35 and outputting the integral value of the high-frequency components in the image signal, control means 50, and a zoom motor driver circuit 61 and a focus motor driver circuit 62 for outputtingmotor drive currents in response to an instruction output from the control means 50, and a timing pulse generator 63 for outputting a timing pulse to the CCD 35 based on an instruction output from the control means 50 so that the AFDSP 40 can capture thinned images alone or all the images from the CCD 35.

The CCD 35 includes a matrix of image pickup elements of about sum 300 million pixels (640 vertical lines by 480 horizontal lines). The CCD 35, in response to an instruction from the timing pulse generator 63, outputs the image pickup data of all pixels on the 480 horizontal lines to the AFDSP 40, or thinned data of the pixels of a predetermined number of lines, for example 96 lines picked up every five lines on the horizontal (or vertical) line, to the AFDSP 40.

TheAFDSP 40 includes a high-pass filter 41 for extracting high-frequency signals in a high-frequency band out of image signals captured from the CCD 35, an integrator 42 for integrating the high-frequency band which have passed through the high-pass filter 41 in an AF zone set as a zone for focusing in the image, a high luminance line number extracting section 43 for extracting the number of high luminance lines in the AF zone, and a high luminance threshold value setting section 44 for providing the high luminance line number extracting section 43 with a threshold value. The larger the output of the integrator, or the larger the amount of the high-frequency components, the sharper and better focused the image obtained on the screen will become. Avoltage corresponding to the output of the integrator is called a focusing voltage.

The control means 50 includes focusing voltage detecting means 51, a focusing voltage memory 52 for saving the focusing voltage value obtained before moving a lens, a focusing voltage comparator 53 for comparing the detected value of the focusing voltage detecting means 51 with the contents of the focusing voltage memory 52, a target position calculating section 55 for calculating the target travel position of a lens depending on the output of the comparator 53 and output of the range sensor 24, a motor drive pulse generator 56 for generating a pulse tomove each lens by the difference between the respective target travel position of a focal lens 22a and a zoom lens 22b and outputting the resulting pulse to each driver circuit 61, 62, and a CCD drive controller 57 for outputting a control signal to the timing pulse generator 63. The focusing voltage comparator 53 compares the detected value of the focusing voltage detecting means 51 with the focusing voltage value obtained before moving a lens in order to compare the focusing voltages before and after the lens is moved, and move the lens in the increasing direction of the focusing voltage to attain the focus.

The control means 50 further includes a high luminance line number default value setting section 58, a high luminance line number comparator 59 for comparing the number of high luminance lines in a thinned image extracted by the high luminance line number extracting section 43 with its default value (output value of the setting section 58) , a high luminance determination section 60 for determining whether the detected number of high luminance lines is larger than the default value, and a lighting controller 70 for controlling the pan motors 12a, 13a and tilt motors 12b, 13b of the right/left illuminators 12, 13 when the high luminance determination section 60 has determined that the number of high luminance lines (K)≥ default value (D) or controlling the number of diodes to be illuminated by the illuminators 12, 13.

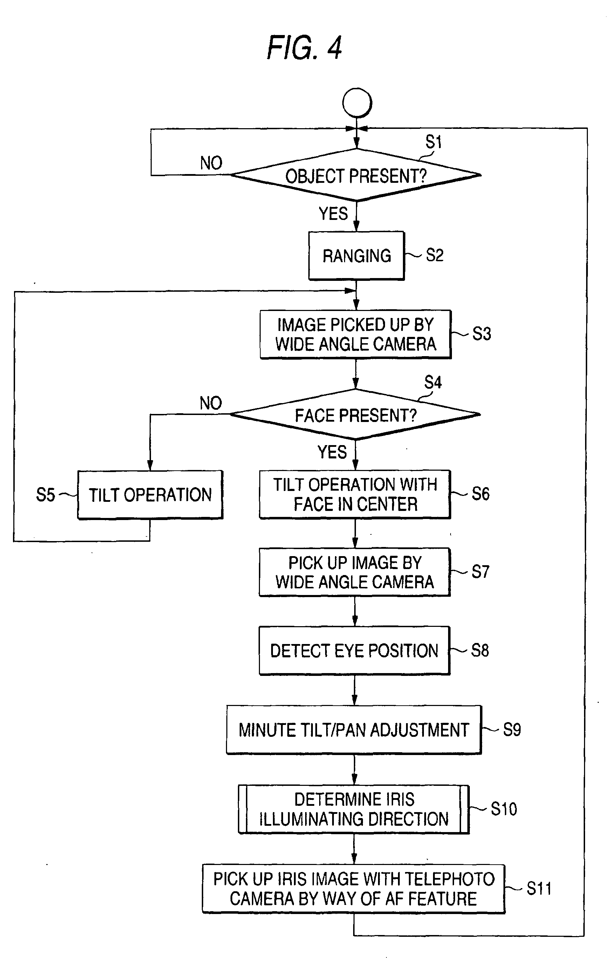

Operation of the iris image pickup apparatus of the foregoing configuration will be described. Fig. 4 is a flowchart showing the operating procedure of the controller provided in the iris image pickup apparatus. In step S1, the controller is in the standby state waiting for an object (person to be authenticated) to enter a predetermined front range of the iris image pickup apparatus. In this standby state, each motor 21, 26, 12a, 13a, 12b, 13b is respectively at a default position (home position) and the range sensor 24 also faces the front position as a default position.

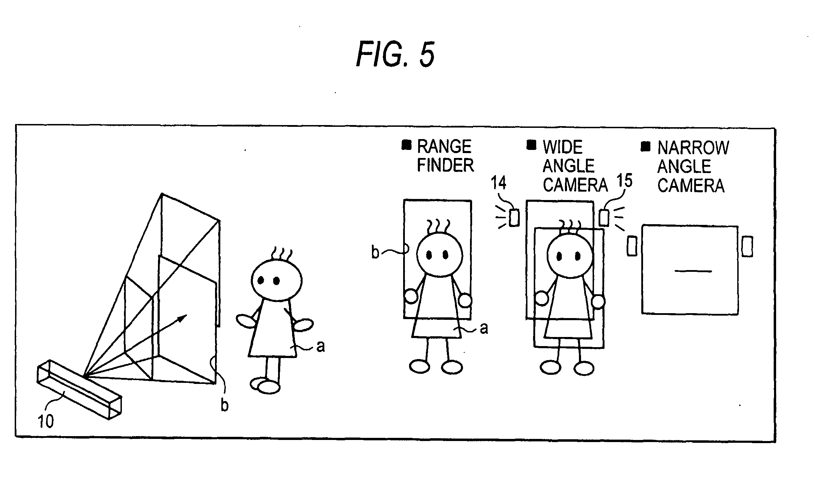

The range sensor 24 in the standby state emits infrared rays constantly or per predetermined time. The presence/absence of a resulting reflected light allows the controller to determine the presence of an object. In case the object a has entered the image pickup range of the iris image pickup apparatus as shown in Fig. 5, the distance from the reflected light to the object a is measured (step S2), and focusing of the wide angle camera 25 is made based on the measured distance and execution proceeds to step S3. In case the iris image pickup apparatus is applied to an ATM terminal of a bank, processing to wait for an object in step S1 may be replaced with processing to wait for start of ATM operation by a person.

In step S3, images are picked up by the wide angle camera 25. At this time, illuminators for wide angle cameras 14, 15 are illuminated. In step S4, the controller 30 uses pattern matching to determine whether the face of the object is in the picked up image. In case the face of the object is not found, the controller 30 outputs a driving instruction to a tilt motor 21 via perform tilt operation (step S5), then captures the image picked up by the wide angle camera in step 83. The aforementioned steps S3, S4, S5 are repeated until the whole face image is captured.

In case the face pattern is found in the image picked up by the wide angle camera, execution proceeds from step S4 to step S6. Tilt operation of the tilt table 20 is made so that the face comes in the center of the image picked up by the wide angle camera. Pan position and tilt position of the iris illuminators 12, 13 in Fig. 1 are adjusted, and the illuminating light irradiation direction is swiveled in advance so that the light illuminates the face. Further, the panmirror 23 is swiveled in advance so that the telephoto camera 22 can pick up the image of the face. Corresponding accurate adjustment is made in step S9 as mentioned later. In step S7, an image is picked up by the wide angle camera. Execution then proceeds to step S8.

In step S8, the controller 30 detects the position of the left eye or right eye from the captured image picked up by the wide angle camera in step S7. Next, the controller 30 converts the position of an eye obtained in step S8 to coordinates of the telephoto camera 22. The controller 30 then obtains the accurate tilt position of the tilt table 20 and the accurate pan position of the pan mirror 25 as well as the accurate tilt position and pan position of the illuminators 12, 13, to carry out minute adjustment of the tile position and the pan position (step S9) so that the telephoto camera 22 will accurately capture the iris and the focused illuminating light of the iris illuminators 12, 13 will be irradiated on the iris.

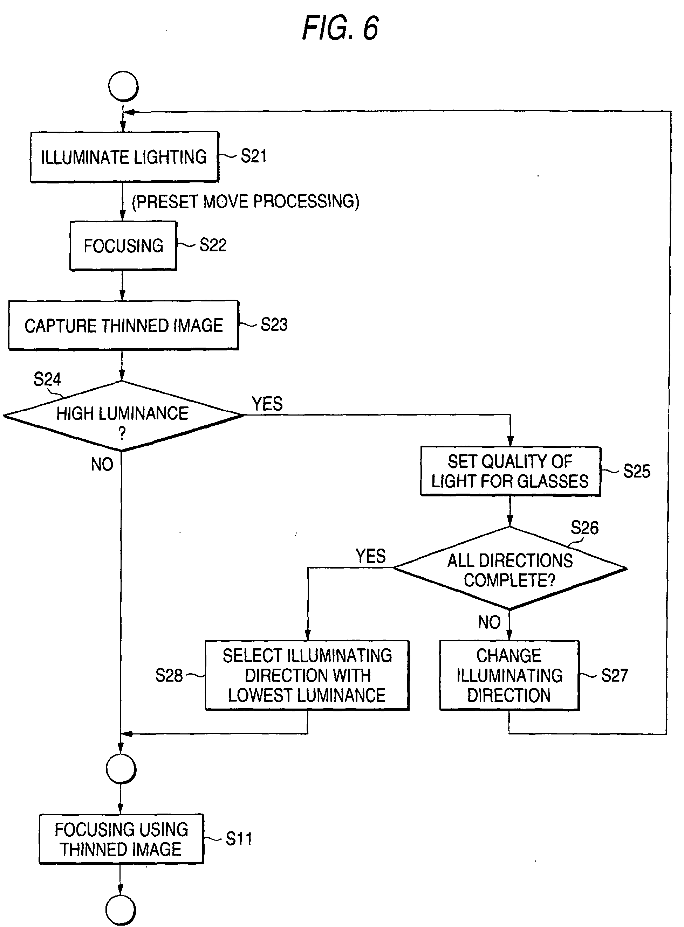

In step S10, the controller performs processing to determine the illuminating direction of the iris illuminators 12, 13. In case a person to be authenticated wears glasses, a reflected light from the glasses is incident on the telephoto camera 22 thus prevents capture of a high-accuracy iris image even when the iris illuminators accurately illuminates the iris. Thus, the controller determines the iris illuminating direction so that the reflected light of an iris illuminating light will not enter an image picked up by the telephotocamera 22. Fig. 6 is a flowchart showing the detailed procedure for determining the iris illuminating direction.

In case six options are provided for example as illuminating directions of the iris illuminators 12, 13, "illuminate only the left illuminator 12 at a default angle," "illuminate only the left illuminator 12 at a predetermined angle upward of a default angle," "illuminate only the left illuminator 12 at a predetermined angle downward of a default angle," "illuminate only the right illuminator 13 at a default angle," "illuminate only the right illuminator 13 at a predetermined angle upward of a default angle," "illuminate only the right illuminator 13 at a predetermined angle downward of a default angle," the controller first "illuminates only the left illuminator 12 at a default angle," in step S21. The types and order of the illuminating directions must be set in the descending order of probability of the reflected light from the glasses not incident on the telephoto camera 22 even when the person to be authenticated wears glasses.

In the next step S22, the controller performs focusing of the telephoto camera 22 by using the measured value of the range finder (range sensor) 24. The distance to the iris measured by the range sensor 24 is preset to the telephoto camera 22 and the focus lens 22a in Fig. 3 is rapidly driven to set the distance to the depth of focus.

In step S23, the controller captures thinned images alone in the picked up images of the CCD35. For example, the controller captures predetermined thinned images picked up based on every other line or every three lines out of all the lines of a picked up image. This is to boost the capture of images as well as the determination on whether the area of the high luminance region contained in an image picked up by the CCD 35 is larger than a predetermined area (determination on whether an illuminating light is in the image). Performing image data capture and determination on all the images picked up by the CCD 35 takes too much time and the person to be authorized will move while determination is made with the illuminating direction changed variously.

In the next step S24, the high luminance line number comparator 59 compares the number of high luminance lines K being equal to or larger than the threshold value extracted by the high luminance line number extracting section 43 in Fig. 3 with the default value D set by the high luminance line number default value setting section 58 to determine whether K ≥ D. In case K ≥ D (determination result is yes) in step S24, it is determined that an illuminating light is in the iris image. Execution proceeds to step S25.

In step S25, the controller increases the quantity of an illuminating light for glasses. In case the number of high luminance lines is equal to or larger than the default value, the object is assumed to wear glasses. An illuminating light for picking up an iris has its quantity of light dropped by some 10 percent when it passes through glasses so that the iris image becomes darker. This is why the quantity of an illuminating light must be increased. This is attained for example by increasing the amount of current flowing through LEDs for illumination or increasing the number of LEDs to be illuminated.

In the next step S26, the controller determines whether all the illuminating directions described concerning step S21 have been attempted. If not, execution returns to step S27 to change the iris illuminating direction, and in step S21, an illuminating light is irradiated in a new direction. In case the number of high luminance lines K ≥ D is not satisfied in the determination in step S24 while the illuminating direction is sequentially switched, execution proceeds from step S24 to step S11 in Fig. 4. In step S11, focusing is made to acquire an iris image to be authenticated, which process is made using a thinned image picked up be the CCD.

In the step S11, the ordinary auto-focus (AF) technology is used to attain focus on the iris. For example, approximate focusing is made to a position determined in step S22. From that position, the motor for driving a focus lens is moved step by step to acquire iris images picked up by the telephoto camera 22 . The focus lens position where the amount of high-frequency components is largest is assumed as a focus position. The iris image obtained then is acquired as an iris image to be authenticated. The controller passes the iris image at the focus position to authentication apparatus (not shown). Execution returns to step S1.

In case the number of high luminance lines K has not lowered the default value D in step S24 although all the iris illuminating directions were attempted, execution proceeds to step S28 to select the illuminating direction where the least number of high luminance lines is obtained of all the attempts of iris illuminating directions, then execution proceeds to step S11. This endures that an iris image is acquired thus avoiding a situation where processing is halted.

While an iris is described as an object of authentication, an retina may be used instead. Features of the face of a person may be formed into a pattern, which may be used as an object of authentication.

As mentioned earlier, according to the embodiment, the irradiating direction of an iris illuminating light is determined based on the number of high luminance lines in a thinned image before acquiring an iris image to be authenticated. It is thus possible to acquire at a high speed a favorable iris image of a person wearing glasses, thereby completing the iris authentication in a short time. The quantity of an iris illumination light is increased when the person wears glasses thus acquiring a clear iris image.

While the invention has been described in detail and referring to a specific embodiment, those skilled in the art will appreciate that the invention may be changed or modified without departing the spirit and scope of the invention.

This application is based on the Japanese Patent Application No. 2001-141661 filed May 11, 2001, which is incorporated herein by reference.

### Industrial Applicability

According to this invention, it is possible to rapidly acquire a favorable image also in case the person to be authorized wears glasses without causing the person's unpleasant feeling due to prolonged authentication time.

## Claims

1. An authentication object image pickup method comprising:
comparing the number of high luminance lines whose luminance value is equal to or larger than a predetermined value among the lines contained in a picked up image of an authentication object, with a set value;
changing an illuminating direction of the authentication object to obtain the illuminating direction where the number of the high luminance lines is smaller than the set value, when the number of the high luminance lines is equal to or larger than the set value,; and
acquiring an image of the authentication object by illuminating the authentication in the illuminating direction obtained.

2. The authentication object image pickup method according to claim 1, further comprising:
acquiring an image of the authentication object by illuminating the authentication object in a illuminating direction where the number of the high luminance lines is smallest, when an illuminating direction where the number of the high luminance lines is smaller than the set value can not be obtained.

3. The authentication object image pickup method according to claim 1 or 2, further comprising:
increasing the quantity of light used at a time of acquiring the image of authentication object, when it is determined that the authentication object wears glasses based on a fact that the number of high luminance lines is equal to or larger than the set value.

4. The authentication object image pickup method according to any one of claims 1 through 3, wherein the process of obtaining the illuminating direction based on the picked up image is performed by using a thinned image where a depth of focus is a distance to the authentication object measured by a ranging sensor.

5. The authentication object image pickup method according to any one of claims 1 through 4, wherein the picked up image is a thinned image including a predetermined number of lines among the lines constituting the entire image.

6. An authentication object image pickup apparatus, comprising:
a camera for picking up an image of an authentication object;
means for extracting an image from image pickup means of the camera;
means for comparing the number of high luminance lines whose luminance value is equal to or larger than a predetermined value among the lines contained in the picked up image with a set value, and determining whether the number of high luminance lines whose luminance value is equal to or larger than the set value;
means for changing the illuminating direction of the authentication object to acquire the illuminating direction where the number of the high luminance lines is smaller than the set value when the number of the high luminance lines is equal to or larger than the set value; and
means for acquiring an image of the authentication object by illuminating the authentication object in the illuminating direction obtained by the means for changing the illuminating direction.

7. The authentication object image pickup apparatus according to claim 6, further comprising:
means for acquiring an image of the authentication object by illuminating the authentication object in the illuminating direction where the number of the high luminance lines is smallest, when an illuminating direction where the number of the high luminance lines is smaller than the set value can not acquired.

8. The authentication object image pickup apparatus according to claim 6 or 7, further comprising:
means for increasing the quantity of light used at a time of acquiring the image of the authentication object, when it is determined that the authentication obj ect wears glasses based on the fact that the number of high luminance lines is equal to or larger than the set value.

9. The authentication object image pickup apparatus according to any one of claims 6 through 8, further comprising:
means for performing processing to obtain the illuminating direction based on the picked up image by using a thinned image where the depth of focus is the distance to the authentication object measured by a ranging sensor.

10. The authentication object image pickup apparatus according to any one of claims 6 through 9, wherein the picked up image is a thinned image including lines at intervals of a predetermined number of lines among the lines constituting the entire image.
